Europäisches Patentamt

European Patent Office

Office européen des brevets

(11) Publication number: **0 088 834**
**B1**

(12) **EUROPEAN PATENT SPECIFICATION**

(45) Date of publication of patent specification: **28.01.87**

(51) Int. Cl.⁴: **G 01 F 25/00**

(21) Application number: **82301226.5**

(22) Date of filing: **11.03.82**

(54) Method and apparatus for gauging vessels.

<table>
<tr><td>(43) Date of publication of application:<br>21.09.83 Bulletin 83/38</td><td>(73) Proprietor: DEMA GLASS LIMITED<br>Maulden Road<br>Flitwick Bedford MK45 5NS (GB)</td></tr>
<tr><td>(45) Publication of the grant of the patent:<br>28.01.87 Bulletin 87/05</td><td>(72) Inventor: Franklin, Derek<br>c/o Dema Glass Limited Maulden Road<br>Flitwick Bedford MK45 5NS (GB)</td></tr>
<tr><td>(84) Designated Contracting States:<br>BE CH DE FR GB IT LI NL</td><td>(74) Representative: Woodin, Anthony John et al<br>Fitzpatricks Kern House 61/62 Lincoln's Inn<br>Fields<br>London WC2B 6EX (GB)</td></tr>
<tr><td>(56) References cited:<br>GB-A-1 175 679<br>GB-A-1 359 161</td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method and apparatus for gauging vessels and particularly but not exclusively for gauging drinking glasses.

It is often necessary to apply a gauge mark to drinking glasses to indicate that when a glass is filled up to the mark it contains a predetermined quantity of liquid. When glasses are made by certain methods, e.g. by blowing into a mould, even though the operating conditions are carefully controlled to obtain glasses of the same size, there are unavoidably small variations in internal dimensions and contour. For this reason, it is necessary to gauge each glass to determine the correct position for the mark. One known method is to calibrate a master glass and adjust a marking machine to a fixed distance between an abutment member engaging the rim of the glass and a marking wheel, the latter being opposite a gauge mark on the calibrated glass. Each glass to be gauged is then fitted to the machine in the same way and marked by the wheel. Thus, the distance between the rim and the gauge mark is the same for each glass.

This known method is not always sufficiently accurate and it is an object of the present invention to provide for greater accuracy, at least with some types of glass.

The present invention provides a method of gauging vessels which comprises moving a vessel and an abutment member axially relative to and towards each other until continued axial movement is prevented by engagement of a part of the abutment member with the vessel and then marking the vessel by marking means disposed at a predetermined spacing from said part of the gauging member, characterised in that said part of the abutment member is an end portion of a gauging member, and said end portion engages the interior of the vessel.

While the end portion may engage the base of the vessel interior, it is preferred that it engages the interior at a position adjacent to but spaced from the base. There is a correlation between the inner contour of a glass and the volume within that contour. We have established that, if a disc-like or other symmetrically laterally projecting end portion of the gauging member with a predetermined diameter or width for a particular shape and size of glass is inserted into the glass until the end portion abuts the glass interior at a position adjacent to but spaced from the base of the interior, the marking means will always be in a correct position to mark the glass, giving a fixed volume from the gauging mark to the base of the glass within acceptable limits, regardless of the aforesaid variations in internal dimensions and contours between different glasses of the same shape and size.

It will be seen that the basic difference between the method of the present invention and the prior art method referred to is that the latter measures from the rim and the present method measures from a position (preferably near the base) inside the glass.

Preferably suction is used to hold the vessel in position during marking.

The invention further provides apparatus for gauging vessels comprising an abutment member having a part engageable with a vessel to locate the vessel axially relative to the abutment member and marking means disposed at a predetermined spacing from said part, the marking means being adapted to place a gauge mark on the vessel when the vessel is axially located by said part, characterised in that the abutment member is a gauging member which is insertable into the vessel and which has an end portion constituting the aforesaid part and engageable with the interior of the vessel.

Preferably, said end portion projects laterally and symmetrically from the gauging member, e.g. it is of disc-like shape. Thereby, it can be made of predetermined width or diameter to engage the interior of a vessel at a position adjacent to but spaced from the base thereof.

Preferably, the gauging member contains a duct through which suction can be applied to the interior of a vessel and carries a sealing member axially slidable thereon and resiliently urged towards said end portion for engagement with the rim of a vessel, whereby a vessel can be held in position by suction for marking. The sealing member may have associated therewith tapered guide means for locating the rim of the vessel.

Normally, the gauging member will extend horizontally and be rotatable so that a vessel thereon can be rotated and engaged by a conventional marking wheel.

The invention further provides, for use in carrying out the aforesaid method, a gauging head comprising an elongated gauging member with an end portion engageable with the interior of a vessel, said member containing a duct through which suction can be applied to the interior of the vessel, and a sealing member axially movable on the gauging member and resiliently urged towards said end portion for sealing the mouth of the vessel.

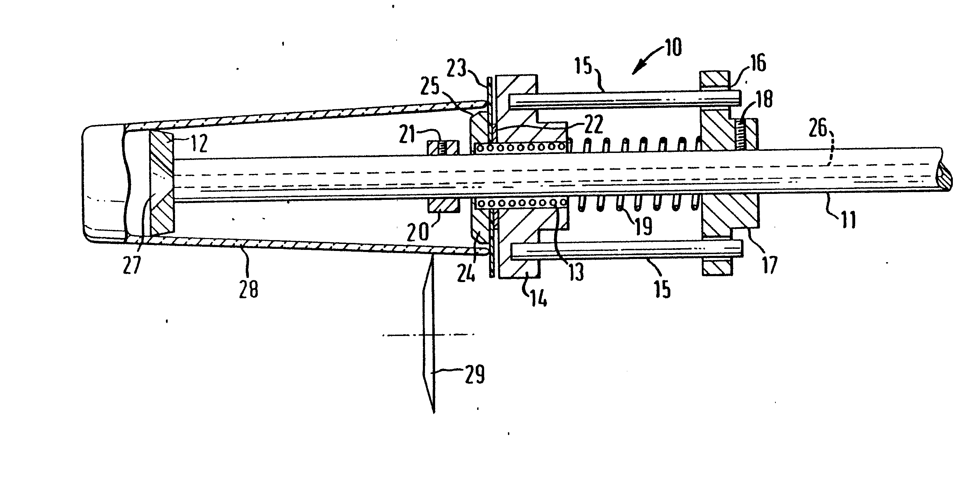

The following is a description, by way of example, of one embodiment of gauging apparatus in accordance with the invention, reference being made to the accompanying drawing which shows a longitudinal section through the apparatus in use.

The gauging apparatus comprises a gauging head 10 having an elongated gauging member in the form of a horizontal spindle 11 which is rotatable by means not shown and which is mounted to prevent axial movement. The gauging member has an end portion in the form of a disc 12 secured to an end of the spindle 11 and projecting laterally and symmetrically therefrom. Slidably mounted on the spindle 11 by means of a linear ball bearing 13 is an annular pad 14 in which are fixed guide rods 15. The rods 15 extend parallel to the spindle 11 and pass slidably through holes 16 in a collar 17 secured against rotational and axial movement on the spindle 11 by a set screw 18. A helical spring 19 is provided around the spindle 11 and bears at its ends against the pad 14 and the collar 17 so that the pad 14 is resiliently urged in a direction towards the disc 12. A ring 20 is secured to the spindle 11 by a set screw 21 to limit movement of the pad by the spring.

On the opposite side of the pad 14 to the spring, there is disposed a thin spacing ring 22 against which bears an annular sealing member 23 of flexible elastomeric material. Beyond the member 23 is an annular guide member 24 having a frusto-conical face 25. The arrangement is such that the sealing member 23 is in air-tight relationship with the spindle 11. The spindle has an axial bore 26 opening through a central hole 27 in the disc 12.

In use of the apparatus, a glass 28 to be gauged is moved axially over the end of the spindle 11. When the rim of the glass bears against the pad 14 through the intermediary of the sealing member 23, the pad will be moved axially until further movement of the glass is prevented by engagement of the edge of the disc 12 with the interior of the glass at a position adjacent to but spaced from its base. The periphery of the disc is shaped to avoid jamming of the disc in the glass. The engagement of the disc 12 in the glass is not air-tight and suction applied to the interior of the glass through the bore 26, the mouth of the glass being sealed by the sealing member 23, holds the glass on the spindle 11 at an axial position determined by the position of engagement by the disc 12. The guide member 24 assists in correct radial location of the glass when it is moved into position. While the spindle and the glass are rotating, a marking wheel 29 at a fixed horizontal location is raised into contact with the glass to cut a gauge mark round it. The marking wheel 29 is always at the same predetermined horizontal spacing from the disc 12 for glasses of a given shape and size and the position of the gauge mark on each glass therefore depends on the position of engagement of the disc 12 with the interior of the glass. Therefore, as previously explained, the position of the gauge mark will depend on the internal dimensions and contour of the particular glass to as to indicate the correct measure.

The drawing shows a glass of frusto-conical shape, but the apparatus can be used with glasses of other shapes, e.g. of goblet and other curved shapes.

The method and apparatus of the present invention are particularly useful for gauging stemmed glasses made by blow-moulding the bowls and drawing the stems from the bowls, since such glasses are particularly likely to vary in internal dimensions and contours.

## Claims

1. A method of gauging vessels which comprises moving a vessel and an abutment member axially relative to and towards each other until continued axial movement is prevented by engagement of a part of the abutment member with the vessel and then marking the vessel by marking means disposed at a predetermined spacing from said part of the gauging member, characterised in that said part of the abutment member is an end portion (12) of a gauging member (11), and said end portion engages the interior of the vessel.

2. A method as claimed in claim 1, characterised in that said end portion (12) engages the vessel interior at a position adjacent to but spaced from the base of the vessel interior.

3. Apparatus for gauging vessels comprising an abutment member having a part engageable with a vessel to locate the vessel axially relative to the abutment member and marking means disposed at a predetermined spacing from said part, the marking means being adapted to place a gauge mark on the vessel when the vessel is axially located by said part, characterised in that the abutment member is a gauging member (11) which is insertable into the vessel and which has an end portion (12) constituting the aforesaid part and engageable with the interior of the vessel.

4. Apparatus as claimed in claim 3, characterised in that said end portion (12) projects laterally and symmetrically from the gauging member (11).

5. Apparatus as claimed in claim 3 or claim 4, characterised in that the gauging member (11) contains a duct (26) through which suction can be applied to the interior of a vessel and carries a sealing member (23) axially slidable thereon and resiliently urged towards said end portion (12) for engagement with the rim of a vessel, whereby a vessel can be held in position by suction for marking.

6. Apparatus as claimed in claim 5, characterised in that the sealing member (23) has associated therewith tapered guide means (24) for locating the rim of a vessel.

7. Apparatus as claimed in claim 3, 4, 5 or 6, characterised in that the gauging member (11) extends horizontally and is rotatable.

8. For use in carrying out the method as claimed in claim 1 or claim 2, a gauging head comprising an elongated gauging member (11) with an end portion (12) engageable with the interior of a vessel, said member containing a duct (26) through which suction can be applied to the interior of the vessel, and a sealing member (23) axially movable on the gauging member and resiliently urged towards said end portion for sealing the mouth of the vessel.

9. A gauging head as claimed in claim 8, characterised in that said end portion (12) is of disc-like shape and projects symmetrically and laterally from the gauging member (11).

## Patentansprüche

1. Verfahren zum Eichen von Gefäßen, bei dem ein Gefäß und ein Anschlagstück in bezug auf das Gefäß und das Anschlagstück koaxial und zueinander bewegt werden, bis die kontinuierliche axiale Bewegung durch Berührung eines Teils des Anschlagstücks an dem Gefäß verhindert wird, wonach das Gefäß durch eine Markierungseinrichtung, die in einem vorherbestimmten Abstand von dem Teil des Eichkörpers angeordnet ist, markiert wird, dadurch gekennzeichnet, daß das Teil des Anschlagstückes ein Endabschnitt (12) eines Eichkörpers (11) ist und der Endabschnitt (12) an das Innere des Gefäßes anstößt.

2. Verfahren nach Anspruch 1, dadurch gekennzeichnet, daß der Endabschnitt (12) das Innere des Gefäßes in einer Stellung berührt, die in der Nähe des Bodens des Gefäßinneren, jedoch in einem Abstand vom Gefäßboden liegt.

3. Vorrichtung zum Eichen von Gefäßen mit einem Anschlagstück, das ein Teil aufweist, das mit einem Gefäß in Berührung treten kann, um das Gefäß axial im Verhältnis zum Anschlagstück zu fixieren, und mit einer Markierungseinrichtung, die in einem vorherbestimmten Abstand von dem Teil angeordnet ist, wobei die Markierungseinrichtung dafür eingerichtet ist, eine Eichmarke am Gefäß anzubringen, wenn das Gefäß durch das Teil fixiert ist, dadurch gekennzeichnet, daß das Anschlagstück ein in das Gefäß einsetzbarer Eichkörper (11) ist, der einen Endabschnitt (12) aufweist, der das Teil darstellt und für eine Berührung mit dem Inneren des Gefäßes geeignet ausgebildet ist.

4. Vorrichtung nach Anspruch 3, dadurch gekennzeichnet, daß der Endabschnitt (12) längsgerichtet vom und symmetrisch zum Eichkörper (11) hervorragt.

5. Vorrichtung nach Anspruch 3 oder 4, dadurch gekennzeichnet, daß der Eichkörper (11) ein Rohr (26) enthält, durch welches auf das Innere des Gefäßes ein Sog ausgeübt werden kann, und welches ein darauf axial verschiebbares Abdichtungsstück (23) trägt, welches elastisch gegen den Endabschnitt (12) zwecks Berührung mit dem Rand eines Gefäßes gedrückt ist, wodurch ein Gefäß durch Sog zur Markierung in Position gehalten werden kann.

6. Vorrichtung nach Anspruch 5, dadurch gekennzeichnet, daß das Abdichtungsstück (23) damit verbundene, abgeschrägte Führungsmittel (24) zur örtlichen Festlegung des Randes eines Gefäßes aufweist.

7. Vorrichtung nach Anspruch 3, 4, 5 oder 6, dadurch gekennzeichnet, daß sich der Eichkörper (11) horizontal erstreckt und drehbar ist.

8. Verwendung eines Eichkörpers zur Durchführung des Verfahrens nach Anspruch 1 oder 2, der einen länglichen Eichkörper (11) mit einem Endabschnitt (12), welcher mit dem Inneren eines Gefäßes in Berührung treten kann, wobei der Eichkörper (11) ein Rohr enthält, durch welches Sog auf das Gefäßinnere ausgeübt werden kann, und ein Abdichtungsstück, welches auf dem Eichkörper axial verschiebbar ist und welches elastisch gegen den Endabschnitt zur Abdichtung der Behälteröffnung gedrückt wird, aufweist.

9. Eichkörper nach Anspruch 8, dadurch gekennzeichnet, daß der Endabschnitt (12) von scheibenartiger Formgebung ist und symmetrisch vom längsgerichtet zum Eichkörper (11) hervorragt.

## Revendications

1. Procédé de jaugeage de récipients qui comprend le déplacement d'un récipient et d'un élément de butée dans la direction axiale l'une vers l'autre jusqu'à ce qu'un mouvement axial continu soit empêché par l'engagement d'une partie de l'élément de butée avec le récipient et ensuite le marquage du récipient par des moyens de marquage disposés à une distance prédéterminée de ladite partie de l'élément de jaugeage, caractérisé par le fait que ladite partie de la pièce de butée est une portion d'extrémité (12) d'un élément de jaugeage (11) et que ladite portion d'extrémité s'emboîte avec l'intérieur du récipient.

2. Procédé selon la revendication 1, caractérisé par le fait que ladite portion d'extrémité (12) s'emboîte avec l'intérieur du récipient en une position voisine mais écartée du fond de l'intérieur du récipient.

3. Appareil pour jauger des récipients comprenant un élément de butée ayant une partie susceptible de s'emboîter avec un récipient afin de localiser le récipient dans la direction axiale par rapport à l'élément de butée et des moyens de marquage disposés à une distance prédéterminée de ladite partie, les moyens de marquage étant adaptés pour tracer un repère de capacité sur le récipient quand le récipient est placé dans la direction axiale par ladite partie, caractérisé par le fait que l'élément de butée est un élément de jaugeage (11) qui peut être introduit dans le récipient et qui possède une portion d'extrémité (12) constituant ladite partie ci-dessus et qui est susceptible de s'emboîter avec l'intérieur du récipient.

4. Appareil selon la revendication 3, caractérisé par le fait que ladite portion d'extrémité (12) dépasse latéralement et symétriquement de l'élément de jaugeage (11).

5. Appareil selon l'une des revendications 3 ou 4, caractérisé par le fait que l'élément de jaugeage (11) comprend un conduit (26) par lequel une aspiration peut être appliquée à l'intérieur d'un récipient et porte un élément d'étanchéité (23) susceptible de glisser dans la direction axiale le long de ce conduit, l'élément d'étanchéité étant poussé de façon élastique vers ladite portion d'extrémité (12) pour s'emboîter avec le bord d'un récipient, de façon qu'un récipient puisse être maintenu en place par aspiration pour le marquage.

6. Appareil selon la revendication 5, caractérisé par le fait que l'élément d'étanchéité (23) est associé à des moyens de guidage en pointe (24) pour localiser le bord d'un récipient.

7. Appareil selon l'une des revendications 3, 4, 5 ou 6, caractérisé par le fait que l'élément de jaugeage (11) est orienté horizontalement et peut tourner.

8. Utilisable pour appliquer le procédé selon les revendications 1 ou 2, une tête de jaugeage comprenant un élément de jaugeage allongé (11) dont une portion d'extrémité (12) peut s'emboîter avec l'intérieur d'un récipient, ledit élément comprenant un conduit (26) par lequel une aspiration peut être appliquée à l'intérieur du récipient, et un élément d'étanchéité (23) mobile dans la direction axiale sur l'élément de jaugeage et poussé de façon élastique vers ladite portion d'extrémité pour fermer l'ouverture du récipient.

9. Tête de jaugeage selon la revendication 8, caractérisée par le fait que ladite portion d'extrémité (12) a la forme d'un disque et dépasse symétriquement et latéralement de l'élément de jaugeage (11).